# EUROPÄISCHE PATENTANMELDUNG

(11) **EP 0 901 095 A2**
(43) Veröffentlichungstag der Anmeldung: **10.03.1999**
(21) Anmeldenummer: 98121136.0
(22) Anmeldetag: 21.07.1994
(51) Int. Cl.: G06K 15/00

(54) **Drucker mit einer universellen Schnittstelle**

(30) Priorität: 24.09.1993 DE 4332609
(62) Teilanmeldung aus: 94111343.3
(71) Anmelder: Meto International GmbH, 69434 Hirschhorn/Neckar (DE)
(72) Erfinder: Hagar, Gamal, 64646 Heppenheim (DE)

(57) **Zusammenfassung**

Die Erfindung bezieht sich auf einen Drucker mit einer universellen Schnittstelle, mit einem Prozessor (1), und einer vom Prozessor angesteuerten universellen Schnittstelle (20), an die sowohl ein Speichermedium (26,27) als auch Datenein- und ausgabeanschlüsse (28) für externe Geräte anschließbar sind. Um Einsteckkarten mit unterschiedlich breiten Datenbussen verwenden zu können, wird vorgeschlagen, daß die Breite eines Datenbusses (18, 19) der Schnittstelle (20) durch den Prozessor (1) umschaltbar ist.

## Beschreibung

Die Erfindung bezieht sich auf einen Drucker mit einer universellen Schnittstelle.

Aus der GB 2 211 971 A ist ein Drucker bekannt geworden, bei dem den gesamten Druckmechanismus steuernde Prozessor über einen Bus mit einem Ein- und Ausgabeport sowie mit einem Festwertspeicher (ROM) und einem variablen Speicher (RAM) in Verbindung steht. Am Ein- und Ausgabeport ist neben den Motoren für die Druckmechanik und dem Druckkopf eine Schnittstelle für ein externes Gerät, beispielsweise ein Computer, und ein Festwertspeicher (ROM) für Schriftfonts angeschlossen.

Als nachteilig ist dabei anzusehen, daß die einfache Druckerschnittstelle nur sehr beschränkte Datenein- und ausgabemöglichkeiten bietet. Insbesondere ist es nicht möglich, externe Speichermedien, wie beispielsweise elektronische Speicherkarten, an die Schnittstelle anzuschließen. Derartige Speicherkarten können Daten enthalten, die den Drucker in die Lage versetzen, mit verschiedenen Schrifttypen zu schreiben und müssen bei dem vorbekannten Drucker in die eigens dafür vorgesehene Steckerbuchse eingeschoben werden.

Das Problem der vorliegenden Erfindung besteht darin, die Datenein- und -ausgabemöglichkeiten von Druckern dahingehend zu erweitern, daß auch Daten von externen Speichermedien, wie z.B. von Speicherkarten, in den Drucker einlesbar sind und auf das Speichermedium ausgegeben werden können.

Erfindungsgemäß wird die Aufgabe gelöst durch die Lehre des Anspruchs 1.

Der Kerngedanke besteht darin, den Drucker mit einer universellen Schnittstelle auszustatten, an der sowohl Karten mit Datenein- und -ausgabeanschlüsse für externe Geräte als auch Speichermedien anschließbar sind. Durch Speicherkarten kann beispielsweise die Speicherkapazität des Druckers vergrößert oder unterschiedliche Schrifttypen (Fonts) anhand permanent (in einem ROM) gespeicherter Daten wiedergegeben werden. Eine Grafikkarte ermöglicht, das auszugebende Druckbild auf einem Bildschirm zu kontrollieren, bevor es auf dem Druckmedium ausgedruckt wird, um eventuelle Fehler optisch erkennen und beheben zu können. Schließlich kann die universelle Schnittstelle zum Anschluß beliebiger Ein- und Ausgabekarten dienen. Letztere können zusätzlich zu im Regelfall standardmäßig vorhandenen - Anschlüssen für Datenquellen, wie Computern, verwendet werden, die nicht über die Schnittstelle, sondern anderweitig mit dem Prozessor verknüpft sind. Um Einsteckkarten mit unterschiedlich breiten Datenbussen verwenden zu können, ist die Breite des Datenbusses durch den Prozessor umschaltbar. Es können so beispielsweise 8- und 16-Bit-Einsteckkarten zum Einsatz kommen. Die Umschaltung kann im konkreten hardwaremäßig durch einen in den bidirektionalen Datenbus des Prozessors eingefügten Puffer erfolgen, der durch einen separaten Ausgang des Prozessors gesteuert wird und die Übertragung der höherwertigen Bits des Datenbusses unterbinden (d.h. letztere hochohmig schalten) kann.

Die Vorteile der Erfindung bestehen vornehmlich in der universellen Erweiterbarkeit des Druckers, da beliebige, bereits kommerziell und preiswert verfügbare Einsteckkarten zur Verwendung kommen können.

Derartige Karten weisen im Regelfall eine Schreibsignalleitung und eine Lesesignalleitung für Datenein- und -ausgabeanschlüsse für externe Geräte sowie eine Schreibsignalleitung und eine Lesesignalleitung für Speichermedien auf, so daß auch die Schnittstelle des Druckers mit derartigen Leitungen ausgestattet wird.

Sollen besonders schnelle sogenannte RISC-Prozessoren für Drucker (wie z.B ein AMD 29200) mit gegenüber konventionellen Prozessoren reduziertem Befehlssatz zur Verwendung kommen, um die Geschwindigkeit des Druckers zu steigern, erweist sich die Verwendung eines Multiplexers als notwendig, da derartige Prozessoren lediglich eine Lesesignalleitung und eine Schreibsignalleitung aufweisen, jedoch keinen Ausgang zur Unterscheidung zwischen externen Speichermedien und sonstigen Geräten aufweisen. Der Multiplexer erkennt die Art des anzusteuernden Gerätes anhand des Ausgangssignales eines mit dem Adressbus des Prozessors verknüpften Adressdekoders und steuert die vier Leitungen (die Schreibsignalleitung und die Lesesignalleitung für Datenein- und -ausgabeanschlüsse für externe Geräte sowie die Schreibsignalleitung und die Lesesignalleitung für Speichermedien) der schnittstelle entsprechend. Der Prozessor kann also anhand seines Adressbusses mittels des Adressdekoders und des Multiplexers zwischen den externen Gerätearten umschalten.

Schließlich ist empfohlen, die Schnittstelle mit einem separaten Baudratengenerator als Taktgeber auszustatten, um den Prozessor mit einer beliebigen (insbesondere höheren) Taktfrequenz seines eigenen Taktgebers betreiben zu können.

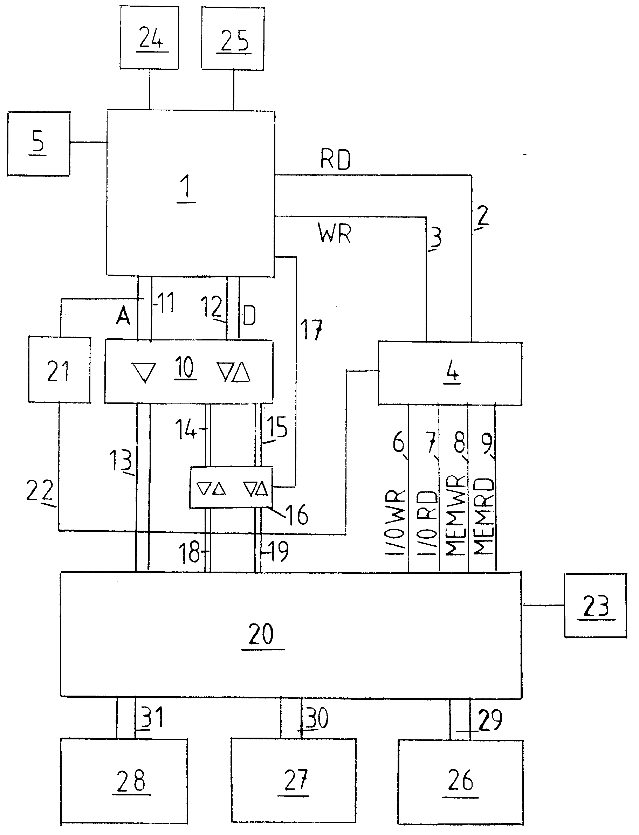

Im folgenden wird eine Ausführungsform der Erfindung anhand der Zeichnung näher erläutert. Sie zeigt in schematischer Darstellung eine Schaltung zur Dateneingabe und -ausgabe eines Druckers.

Die Schaltung besteht in ihrem grundsätzlichen Aufbau aus einem Prozessor (1), der einerseits den eigentlichen Druckmechanismus (25) steuert, andererseits durch einen Adressbus (11) und einen Datenbus (12) mit den zu druckenden Daten versorgt wird, sowie einer Schnittstelle (20), an der unterschiedliche Einsteckkarten mit Speichermedien (26, 27) und Datenein- und ausgabeanschlüsse (28) für externe Geräte angeschlossen sind.

Der Druckmechanismus (25) umfasst die zum Drucken notwendigen mechanischen und elektronischen Elemente, also in der Regel zumindest einen Druckkopf und einen Motor zum Vorschub des Druckmediums, welches beispielsweise Papier oder auf einem Trägerband aufgebrachte Etiketten sein kann. Der Druckmechanismus (25) ist in der Zeichnung nicht näher dargestellt, da er dem Fachmann hinreichend gut bekannt ist. Handelt es sich um einen Thermodrucker, steuert der Prozessor (1) auch die Heizelemente des Thermodruckkopfes.

Der Zeittakt des Prozessors (1) wird durch einen Taktgeber (5) definiert. Eine Dateneingabevorrichtung (24), die als Tastatur und/oder als Bedienungspanel ausgebildet sein kann, dient dem Bediener zur Steuerung des Prozessors (1) und somit des Druckers.

Die entscheidende Neuerung der Erfindung besteht in der Verwendung der Schnittstelle (20), an der unterschiedliche Einsteckkarten durch jeweils einen Bus (29 - 31) angeschlossen werden können, in einem Drucker. Die Schnittstelle (20) ermöglicht, bekannte und kommerziell verfügbare Karten mit Speichermedien (26, 27), Karten mit Datenein und -ausgabeanschlüssen (28) für externe Geräte (I/O-Karten, wie z.B. Centronics-, RS 232, RS 485, Netzwerk (Ethernet), Koaxial- oder Twinax-Schnittstellen) oder Grafikkarten mit dem Prozessor (1) zu verbinden. Selbstverständlich besteht die Möglichkeit, an der Schnittstelle (20) mehr als nur die drei eingezeichneten Einsteckkarten anzuschließen.

Der Adressbus (11) des Prozessors (1) ist über einen unidirektional arbeitenden Teil eines Puffers (10) mit dem Adressbus (13) der Schnittstelle (11) verbunden, während der Datenbus (12) des Prozessors (1) mittels eines bidirektionalen Teils des Puffers (10) und einen weiteren umschaltbaren Puffer (16) an der Schnittstelle (20) angeschlossen ist. Die vom Prozessor (1) ausgelesene Adresse eines Speichers wird somit über den unidirektionalen Teil des Puffers (10) auf die Schnittstelle (11) übertragen; eine Adressübertragung in der umgekehrten Richtung erübrigt sich naheliegenderweise.

Daten können hingegen in beiden Richtungen (vom und zum Prozessor (1) übertragen werden; beispielsweise eine Speicherkarte ist somit bescheib- und lesbar. Der Datenbus (12) des Prozessors (1) wird auf der letzerem gegenüberliegenden Seite des Puffers (10) in zwei gleich große Hälften (in der Regel jeweils 8 Bit umfassend) aufgespalten, die in jeweils einem separaten Bus (14, 15) übertragen werden, um mittels des umschaltbaren, ebenfalls bidirektional arbeitenden Puffers (16) die Datenwortbreite variieren zu können. Der durch die Leitung (17) durch den Prozessor (1) gesteuerte umschaltbare Puffer (16) ermöglicht, die mit der Schnittstelle (20) verbundenen Datenbusse (18, 19) entweder jeweils auf die am Puffer (10) angeschlossenen Datenbusse (14, 15) durchzuschleifen, um die Breite des Datenbusses (in der Regel somit 16 Bit) zu übertragen. Alternativ besteht die Möglichkeit, nur die Bits der niederwertigeren Datenbusse (15, 19) durchzuschleifen und die höherwertigen Datenbusse (14, 18) abzuschalten, also voneinander zu trennen, um an der Schnittstelle (20) Einsteckkarten (26 - 28) mit weniger breiten Datenbussen verwenden zu können. Die an der Leitung (17) anliegende Information entspricht somit einem die höherwertigen Bits ein- und ausschaltenden Steuersignal.

Da als Prozessor (1) eine relativ schnelle Ausführungsform (RISC-Prozessor) zur Verwendung kommt, die lediglich zwei Ausgangssteuerleitungen (2, 3) aufweist, erweist sich zur Ansteuerung der Schnittstelle (20) ein Multiplexer (4) als notwendig. Die Lesesignalleitung (2) des Prozessors (1) ist in der Zeichnung mit RD ("read") bezeichnet, während die Schreibsignalleitung mit WR ("write") gekennzeichnet ist. Falls der Prozessor (1) Daten einliest, liegt an der Lesesignalleitung (2) eine logische Eins an, während hingegen eine Eins an der Schreibsignalleitung (3) anliegt, sobald der Prozessor (1) Daten an die Schnittstelle (20) überträgt. Die Schnittstelle ihrerseits weist jedoch vier Signalleitungen (6 - 9) auf, von denen jeweils eine auf Eins gelegt werden kann. Falls der Prozessor (1) auf ein externes Gerät über die Schnittstelle Daten überträgt, ist die mit I/O WR bezeichnete Schreibsignalleitung (6) auf Eins zu legen; liest der Prozessor (1) Daten von einem externen Gerät über die Schnittstelle ein, ist die mit I/O RD gekennzeichnete Lesesignalleitung mit Eins zu legen. Analog wird die Schreibsignalleitung für externe Speichermedien (8) auf Eins gelegt, falls eine an der Schnittstelle (20) angeschlossene Speicherkarte beschrieben werden soll. Schließlich wird die Lesesignalleitung MEMRD (9) für externe Speicherkarten Eins, sobald der Prozessor (1) aus einer externen Speicherkarte Daten auszulesen beabsichtigt. Um den schnellen Prozessor (1) mit der Schnittstelle betreiben zu können, steuert er über den Adressbus (11) den Adressdekoder (21), der anhand der darauf vorliegenden Adresse erkennt, ob der Prozessor (1) einerseits eine Ein- oder Ausgabeoperation in ein peripheres Gerät durchführt oder andererseits ein Speicherelement eines externen Speichermediums beschreibt oder ausliest. Der Multiplexer (4) steuert anhand des Ausganges (22) des Adressdekoders (21) sowie der Lesesignalleitung (2) und der Schreibsignalleitung (3) des Prozessors (1) die vier an der Schnittstelle (20) angeschlossenen Signalleitungen (6 - 9). Ist die Lesesignalleitung (2) des Prozessors (1) auf Eins und anhand des Ausgangs (22) des Adressdekoders (21) erkennbar, daß eine Speicheroperation durchgeführt wird, legt der Multiplexer (4) nur die MEMRD Lesesignalleitung (9) für externe Speichermedien auf Eins. Beabsichtigt der Prozessor (1), Daten aus einem externen Gerät auszulesen, geht der Ausgang des Adressdekoders (21) in den entgegengesetzten logischen Zustand über und nur die I/O RD Signalleitung (7) wird auf Eins gesetzt. Entsprechend werden - abhängig vom Ausgang (22) des Adressdekoders (21) die I/O WR bzw. die MEM WR Signalleitungen (6, 8) auf Eins gesetzt, falls die Schreibsignalleitung (3) des Prozessors (1) auf Eins steht. Anzumerken bleibt, daß an den Leitungen (2, 3, 6 - 9) anstelle der jeweiligen Lese- bzw. Schreibsignale auch ihre logischen Komplemente anliegen können.

Die Schnittstelle (20) weist weiterhin einen separaten Taktgeber, den Baudratengenerator (23) auf.

Im Ergebnis erhält man einen Drucker, der sich durch universelle Verwendbarkeit und aufgrund des schnellen Prozessors durch hohe Arbeitsgeschwindigkeit auszeichnet.

## Patentansprüche

1. Drucker mit einer universellen Schnittstelle, mit einem Prozessor (1), und einer vom Prozessor angesteuerten universellen Schnittstelle (20), an die sowohl ein Speichermedium (26,27) als auch Datenein- und ausgabeanschlüsse (28) für externe Geräte anschließbar sind, wobei die Breite eines Datenbusses (18, 19) der Schnittstelle (20) durch den Prozessor (1) umschaltbar ist.

2. Drucker nach Anspruch 1, dadurch gekennzeichnet, daß die Schnittstelle (20) eine Schreibsignalleitung (6) und eine Lesesignalleitung (7) für Datenein- und -ausgabeanschlüsse (28) für externe Geräte sowie eine Schreibsignalleitung (8) und eine Lesesignalleitung (9) für Speichermedien (26,27) aufweist.

3. Drucker nach Anspruch 2, gekennzeichnet durch einen Multiplexer (4), der anhand einer Lesesignalleitung (2), einer Schreibsignalleitung (3) und des Adressbusses (11) des Prozessors (1) die Schreib- und Lesesignalleitungen (6 - 9) der Schnittstelle (20) steuert.

4. Drucker nach Anspruch 3, gekennzeichnet durch einen Adressdekoder (21), der den Multiplexer (4) anhand des Adressbusses (11) des Prozessors (1) steuert.

5. Drucker nach einem der Ansprüche 1 bis 4, gekennzeichnet durch einen Baudratengenerator (23) als Taktgeber der Schnittstelle (20), wobei der Prozessor (1) einen eigenen Taktgeber (5) aufweist.

6. Drucker nach einem der Ansprüche 1 bis 5, dadurch gekennzeichnet, daß der Prozessor (1) einen Druckmechanismus (25) steuert.

7. Drucker nach einem der Ansprüche 1 bis 6, dadurch gekennzeichnet, daß er ein Thermodrucker ist, mit dem Etikettenstreifen bedruckbar sind.

8. Drucker nach einem der Ansprüche 1 bis 7, dadurch gekennzeichnet, daß der Prozessor (1) ein RISC-Prozessor ist.
